# EUROPEAN PATENT SPECIFICATION

(11) **EP 1 271 748 B1**
(45) Date of publication and mention of the grant of the patent: **28.01.2004**
(21) Application number: 01115312.9
(22) Date of filing: 25.06.2001
(51) Int. Cl.: H02K 11/04, H02K 21/22, H02K 7/14, H02K 3/52

(54) **Wheel structure with inner stator and a drive circuit inside of the statorcore**
Radstruktur mit innenliegendem Ständer und im Ständerkörper integrierter Feldsteuerung
Structure de roue avec stateur interne et circuit de puissance integré au corps de stateur

(43) Date of publication of application: 02.01.2003
(73) Proprietor: HSU, Chun-Pu, Taipei Hsien, Taiwan, R.O.C. (TW)
(72) Inventor: HSU, Chun-Pu, Taipei Hsien, Taiwan, R.O.C. (TW)
(74) Representative: Schnekenbühl, Robert Matthias L.

(56) References cited:
- EP-A- 0 722 210
- US-A- 5 654 598
- PATENT ABSTRACTS OF JAPAN vol. 1999, no. 01, 29 January 1999 (1999-01-29) -& JP 10 285891 A (TOYOTA MOTOR CORP), 23 October 1998 (1998-10-23)
- PATENT ABSTRACTS OF JAPAN vol. 007, no. 239 (E-206), 25 October 1983 (1983-10-25) & JP 58 127552 A (SUWA SEIKOSHA KK), 29 July 1983 (1983-07-29)

## Description

### Field of the invention

The present invention relates to a wheel drum structure of an inner stator portion with an inbuilt driving control circuit and, more particularly, to a wheel drum type outer rotor motor having an inner stator portion, which uses an inner ring portion thereof to build a maximal hollow space to receive a driving control circuit therein.

### Background of the invention

EP-0722210-A discloses a motor with an inner stator and an inbuilt driving control circuit, comprising further
- an inner stator portion whose inner ring portion (back iron) forms a maximal hollow space, an outer edge end of said inner ring portion (back iron) extending outwards equidistantly and radially to form a plurality of stator teeth, wire grooves being formed between adjacent stator root ends (teeth) to receive stator coils;
- a stator coil circuit board (winding connection board) providing a plurality of solder holes that wire heads or tails can pass through and can be fixed;
- a driving control circuit soldered and fixed on a driving circuit board and a control circuit board, which are locked at one side and disposed in the hollow space;
- a shaft tightly joined in a concentric through hole and protruding out of a housing cover, and
- an outer rotor portion comprising a bearing, an inner bore of the bearing being sleeved onto the shaft, and an outer bore thereof (outer bearing surface) being sleeved into the housing cover of outer rotor portion, the housing cover is attached to rotor magnets and an iron yoke in ring shape.

As shown in Fig. 1A, another prior art wheel drum type outer rotor motor (see also US-6 483 213) comprises an axial through inner hole 315, coil wire heads/tails 419, a magnet iron yoke ring 611, an outer rotor housing 612, a housing end cover plate 613, a bearing 614, an outer rotor magnet 615, an inner stator 71, and a sensing circuit board 712.

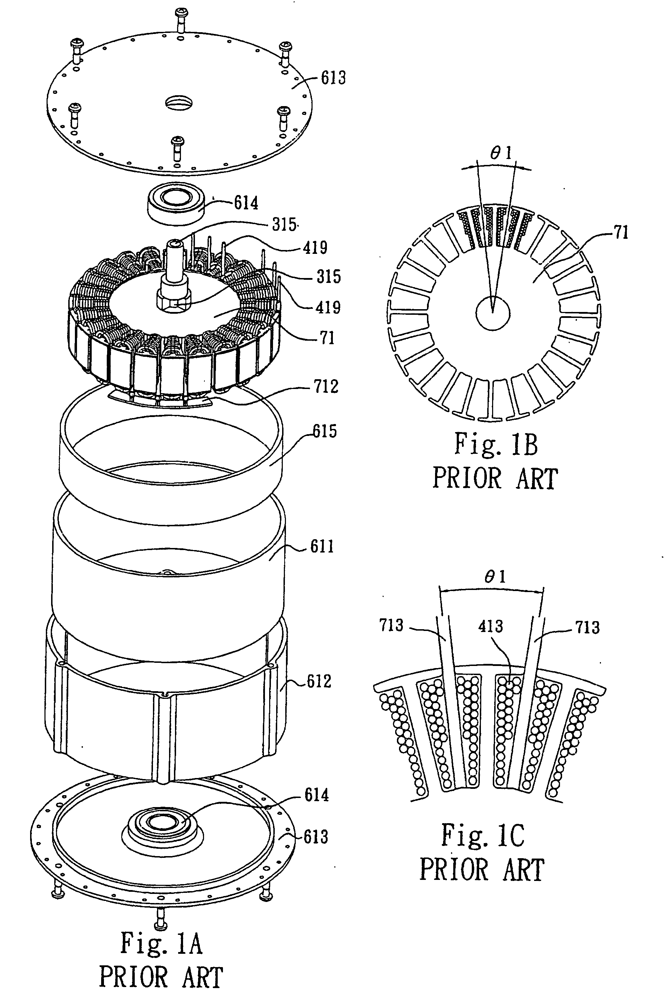

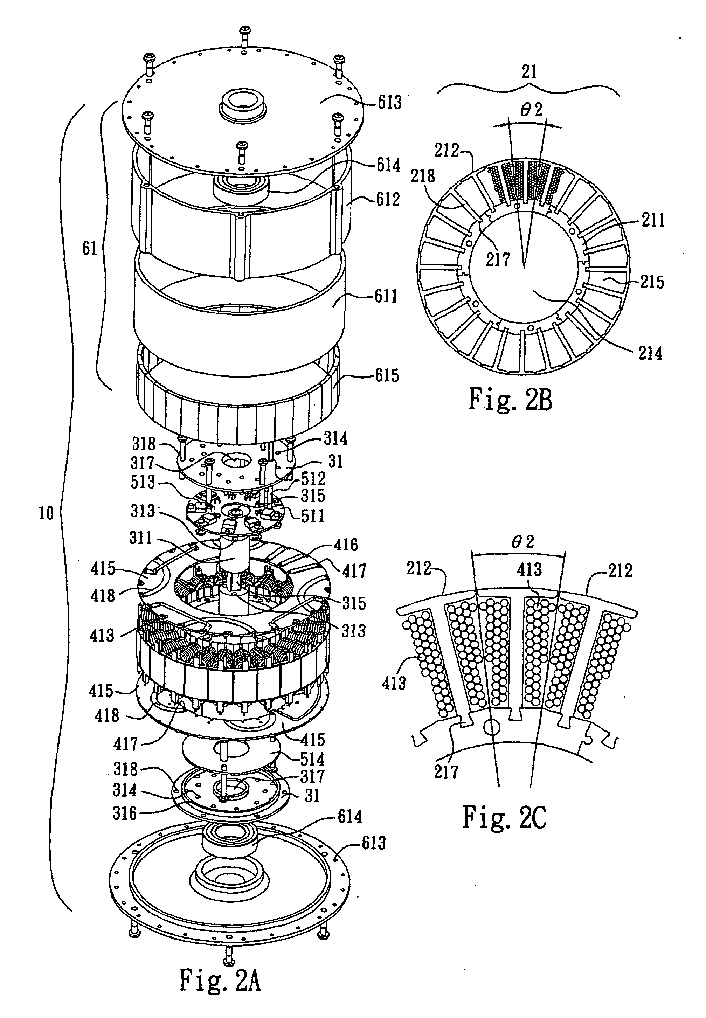

The bottleneck of manufacturing a motor of high operational efficiency usually arises in the problem of winding an exciting coil, e.g., a winding path 713 of a winding guide needle shown in Figs. 1B and 1C. For a motor to have a high operational efficiency, it must have corresponding electric load and magnetic load. The electric load relates to the thickness of wound conductor of an exciting coil of a stator. A higher electric load represents a higher exciting current. To have a higher exciting current, an exciting coil with a thicker wound conductor is required so that the higher exciting current can flow therein. To enhance the effective operational efficiency of a motor, the occupied ratio of volume of an exciting coil in a wire groove must be increased to receive stator coils of thicker wire and lower impedance, e.g., stator coils 413 shown in Fig. 2B and 2C.

Additionally, a driving control circuit of a conventional wheel drum type motor is installed outside the motor. Because a guide wire connected between the driving control circuit or a detecting circuit and the motor is longer, the whole control system is easily affected. Moreover, the installed position of the driving control circuit is also a problem. If the driving control circuit is used in an electric light vehicle, the path of the guide wire between the wheel drum type motor and the driving control circuit and delicacy of the whole system must be taken into account.

### Summary of the invention

In consideration of the problems of a conventional wheel drum type motor, the inner bore of a conventional inner stator portion (e.g., an inner stator 71 shown in Fig. 1B) is maximally enlarged (e.g., a hollow space 213 shown in Fig. 2B). Because it is alright that magnetic conduction space at the inner bore portion is appropriate when a motor is excited, the inner bore of a stator inner ring portion can be enlarged. The enlarged hollow space can receive a driving control circuit of the motor, hence resolving the problems of disposition of the circuit, wiring engineering, and circuit disturbance. Furthermore, a root end of the stator portion can be equiangularly separated from an outer ring portion of the inner stator according to the number of wire grooves. The separated root end must correspond to the outer ring portion of the inner stator to build embedded joining ends penetrating each other. Therefore, an insulated wire groove seat of the stator root end can be formed at the outer stator coil in advance and then insulatedly disposed in a wire groove seat. This represents that the occupied ratio of volume of the stator coil in the stator wire groove can be greatly enhanced (e.g., (θ2) shown in Fig. 2B and 2C). A wheel drum structure of an inner stator portion with an inbuilt driving control circuit of the present invention can let a wheel drum type motor have a high operational efficiency, a high structural strength, and the characteristics of easy installation and maneuver and immune to disturbance.

The various objects and advantages of the present invention will be more readily understood from the following detailed description when read in conjunction with the appended drawing, in which:

### Brief description of the drawings:

Fig. 1A is an exploded perspective view of a prior art outer rotor wheel drum type motor;
Figs. 1B and 1C show θ1 windings of a prior art outer rotor wheel drum type motor;
Fig. 2A is an exploded perspective view of a wheel drum type motor according to an embodiment of the present invention;
Figs. 2B and 2C show θ2 windings of a wheel drum type motor according to an embodiment of the present invention;
Fig. 3 is an exploded perspective view showing that a driving control circuit is disposed in a hollow space of a stator inner ring portion of an inner stator portion according to an embodiment of the present invention;
Fig. 4A is an exploded perspective view showing a connection way of wire of a driving circuit and a stator coil circuit board according to an embodiment of the present invention;
Fig. 4B is a perspective view showing a connection way of wire of a driving circuit and a stator coil circuit board according to an embodiment of the present invention;
Fig. 5A is a perspective view of an assembled inner stator portion and an outer rotor portion according to an embodiment of the present invention;
Fig. 5B is a perspective side view of an assembled wheel drum according to an embodiment of the present invention;
Fig. 5C is a side view of an assembled wheel drum according to an embodiment of the present invention; and
Figs. 6A and 6B show cross-sectional views of an integrally formed inner stator portion and an assembled inner stator portion according to an embodiment of the present invention.

### Detailed description of the preferred embodiments

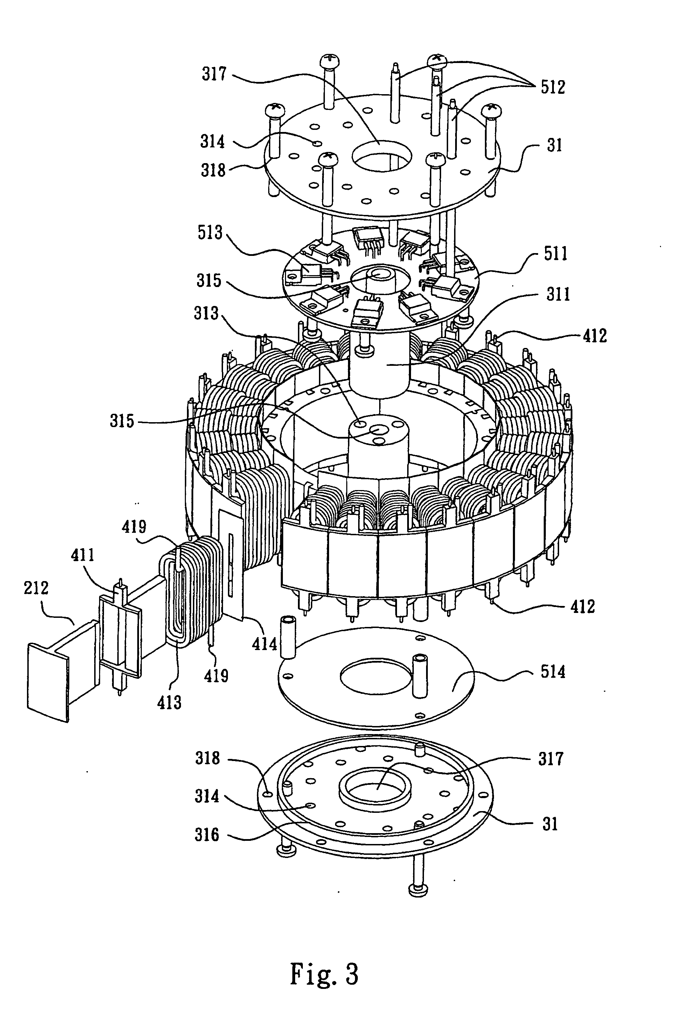

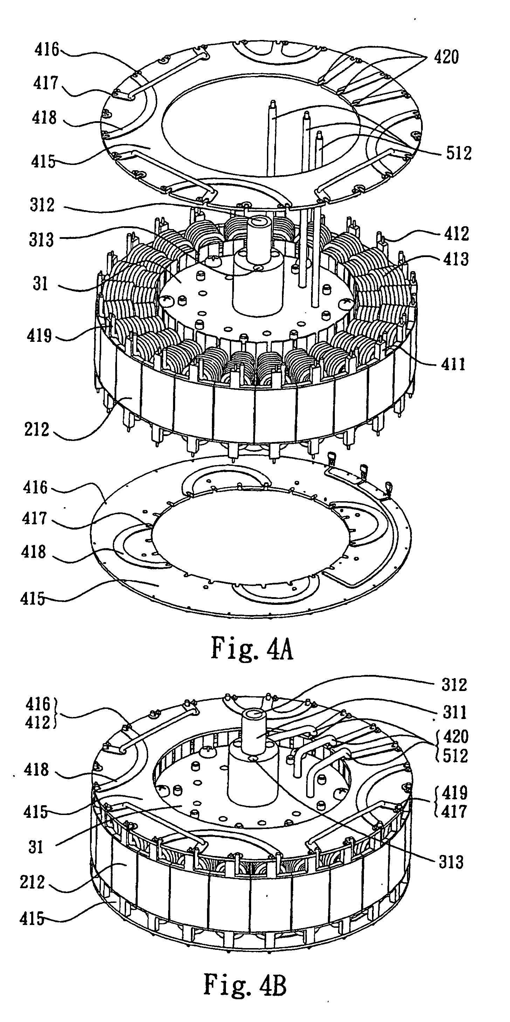

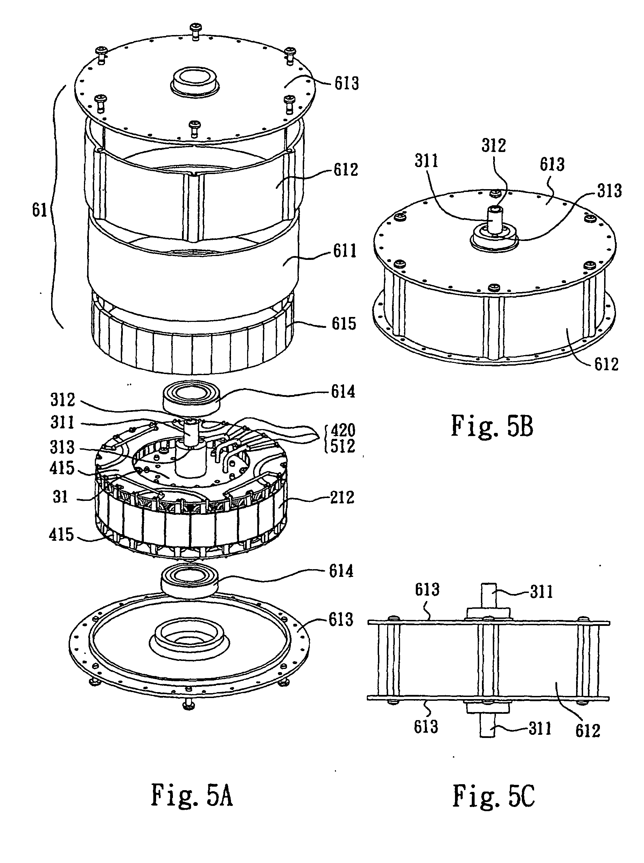

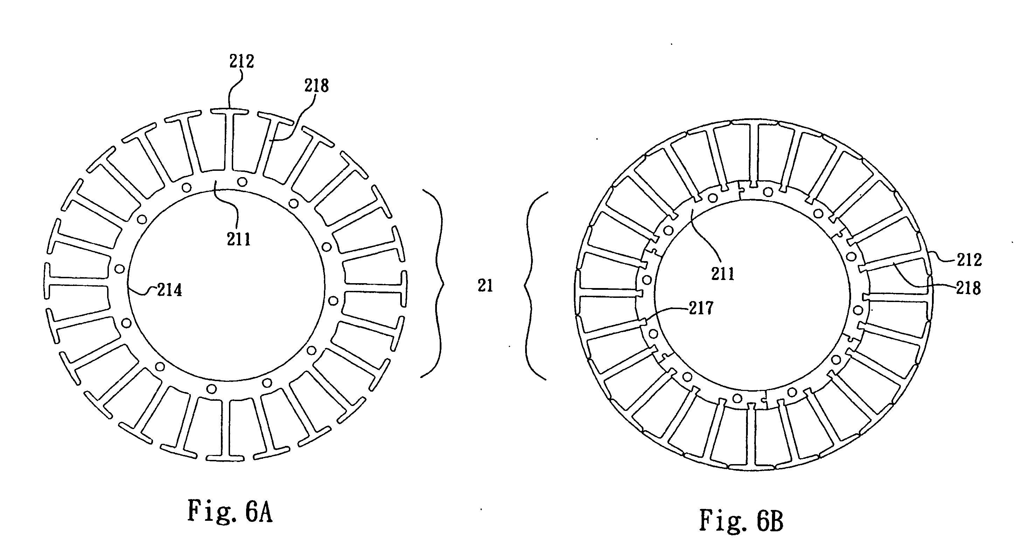

As shown in Figs. 2A to Fig. 6B, a wheel drum structure of an inner stator portion with an inbuilt driving control circuit of the present invention comprises an inner stator portion 21, a stator coil circuit board 415, two end cover plates 31, a driving control circuit, a wheel drum supporting shaft 311, and an outer rotor portion 61.

An inner ring portion 211 of the inner stator portion 21 forms a maximal hollow space 214. The outer edge end of the inner ring portion 211 extends outwards equidistantly and radially to form a plurality of stator teeth 212. Wire grooves 215 are formed between adjacent stator root ends 218 to receive stator coils 413.

The stator coil circuit board 415 provides a plurality of solder holes 417 so that wire heads/tails 419 of the stator coils 413 can penetrate through and be fixed. The stator coil circuit board 415 also has a plurality of circuit board positioning holes 416, circuit copper foil lines 418, and connection wire solder holes 420.

The two end cover plates 31 cover an upper and a lower end faces of the stator inner ring portion 211. Central ends of the two end cover plates 31 correspond to a common center of the outer rotor portion 61 and the inner stator portion 21 of a motor to form a concentric through hole 317.

The driving control circuit is soldered and fixed on a driving circuit board 511 and a control circuit board 514, which are locked at one side of the two end cover plates 31 and disposed in the hollow space 214 of the stator inner ring portion 211. The driving circuit board 511 also has driving circuit connection wires 512 and driving circuit switches 513.

The wheel drum supporting shaft 311 is tightly joined in the concentric through hole 317 at the central ends of the two end cover plates 31, and protrudes out of a housing end cover plate 613 of the wheel drum. At least more than one through holes 312 and 313 are disposed at and beside the axis of the supporting shaft 311 to be penetrated through by power supply wires of the driving control circuit. Instructions of the control circuit are also transferred from an external control system via the through holes 312 and 313.

The outer rotor portion 61 comprises a bearing 614. The inner bore of the bearing 614 is sleeved onto the wheel drum supporting shaft 311, and the outer bore thereof is sleeved into the housing end cover plate 613 of the outer rotor portion 61. The housing end cover plate 613 clips and locks an outer rotor magnet 615 and a magnet iron yoke ring 611 to excite armature reaction with the inner stator portion 21.

The stator coils 413 in the inner stator portion wire grooves 215 are formed by separately winding (e.g., with a spindle winding machine) or bending (e.g., with a spring-forming machine). Each of the stator coils 413 is sleeved into a wire groove seat 411, installed at one of the stator root ends 218 and matched with an insulating sheet 414, and then sleeved into an embedding groove 217 of the stator ring portion 211. Each of the wire groove seats 411 also has a positioning needle 412.

The stator coils 413 in the inner stator portion wire grooves 215 can be directly wound in the wire groove seats 411, installed at the stator root ends 218, and then sleeved into the embedding grooves 217 of the stator ring portion 211.

The stator coils 413 in the inner stator portion wire grooves 215 can also be formed by concentratedly winding across grooves, and are then insulatedly installed into the stator wire grooves.

The stator inner portion 211 and the stator teeth 212 of the inner stator portion 21 can be independently formed by drawing and stacking. The stator teeth 212 are assembled with the wire groove seats 411 and the stator coils 413 and then sleeved with the stator inner ring portion 211 to form the whole inner stator portion 21, as shown in Fig. 6B.

The stator inner portion 211 and the stator teeth 212 of the inner stator portion 21 can also be integrally formed by drawing and stacking, as shown in Fig. 6A. The stator coils 413 are then insulatedly installed into the wire grooves 215.

It is feasible that only the driving circuit board 511 of the driving control circuit is installed in the hollow space 214 of the stator inner ring portion 211.

It is also feasible that both the driving circuit board 511 and the control circuit board 514 of the driving control circuit are installed in the hollow space 214 of the stator inner ring portion 211.

Outer edge ends of the end cover plates 31 of the inner stator portion 21 correspond to the hollow space 214 of the inner ring portion 211 to form flange ends 316, which cover an upper and a lower end faces of the stator inner ring portion 211. The end cover plates 21 also have a plurality of through holes 314. An outer periphery of each of the flange ends 316 has a plurality of end cover plate positioning holes 318, which are concentrically locked with two end faces of the stator inner ring portion 211 to form the hollow space 214 of the inner ring portion 211. The driving circuit of the driving circuit board 511 in the hollow space 214 is soldered to the stator coils 413 to form an exciting coil winding network. The control circuit board 514 is controlled by an external control system to let the driving circuit board 511 maneuver the stator coils 413 to excite armature reaction with the outer rotor magnet 615.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. A wheel drum structure of an inner stator portion (21) with an inbuilt driving control circuit, comprising:
an inner stator portion (21) whose inner ring portion (211) forms a maximal hollow space (214), an outer edge end of said inner ring portion (21) extending outwards equidistantly and radially to form a plurality of stator teeth (212), wire grooves (215) being formed between adjacent stator root ends (218) to receive stator coils (413);
a stator coil circuit board (415) providing a plurality of solder holes (417) so that wire heads/tails (419) of said stator coils (413) can penetrate through and be fixed;
two end cover plates (31) covering an upper and a lower end faces of said stator inner ring portion (211), central ends of said two end cover plates (31) corresponding to a common center of an outer rotor portion (61) and said inner stator portion (21) of a motor to form a concentric through hole (317);
a driving control circuit soldered and fixed on a driving circuit board (511) and a control circuit board (514), which are locked at one side of said end cover plates (31) and disposed in said hollow space (214) of said stator inner ring portion (211);
a wheel drum supporting shaft (311) tightly joined in the said concentric through hole (317) at the central ends of said end cover plates (31) and protruding out of a housing end cover plate (613) of the wheel drum, at least more than one through holes (313) being disposed on said supporting shaft (311) to be penetrated through by power supply wires of said driving control circuit, instructions of said control circuit being also transferred from an external control system via said through holes (313); and
an outer rotor portion (61) comprising a bearing (614), an inner bore of said bearing (614) being sleeved onto said wheel drum supporting shaft (311), and an outer bore thereof being sleeved into said housing end cover plate (613) of said outer rotor portion (61), said housing end cover plate (613) clipping and locking an outer rotor magnet (615) and a magnet iron yoke ring (611) to excite armature reaction with said inner stator portion (21).

2. The wheel drum structure of an inner stator portion with an inbuilt driving control circuit as claimed in claim 1, wherein said stator coils in said wire grooves are formed by separately winding or pressing and bending, each of said stator coils being sleeved into a wire groove seat, installed at a stator root end, and then sleeved into an embedding groove of said stator ring portion.

3. The wheel drum structure of an inner stator portion with an inbuilt driving control circuit as claimed in claim 1, wherein said stator coils in said wire grooves are directly wound in said wire grooves, installed in stator root ends, and then sleeved into embedding grooves of said stator ring portion.

4. The wheel drum structure of an inner stator portion with an inbuilt driving control circuit as claimed in claim 1, wherein said stator coils in said inner stator portion wire grooves are formed by concentratedly winding across grooves and then insulatedly disposed into said wire grooves.

5. The wheel drum structure of an inner stator portion with an inbuilt driving control circuit as claimed in claim 1, wherein said stator inner ring portion and said stator teeth of said inner stator portion are independently formed by drawing and stacking, and said stator teeth are assembled with wire groove seats and said stator coils and then sleeved with said stator inner ring portion to form a whole inner stator portion.

6. The wheel drum structure of an inner stator portion with an inbuilt driving control circuit as claimed in claim 1, wherein said stator inner ring portion and said stator teeth of said inner stator portion are integrally formed by drawing and stacking, and said stator coils are then insulatedly installed into said wire grooves.

7. The wheel drum structure of an inner stator portion with an inbuilt driving control circuit as claimed in claim 1, wherein only said driving circuit board of said driving control circuit is installed in said hollow space of said stator inner ring portion.

8. The wheel drum structure of an inner stator portion with an inbuilt driving control circuit as claimed in claim 1, wherein both said driving circuit board and said control circuit board of said driving control circuit are installed in said hollow space of said stator inner ring portion.

9. The wheel drum structure of an inner stator portion with an inbuilt driving control circuit as claimed in claim 1, wherein outer edge ends of said end cover plates of said inner stator portion correspond to said hollow space of said inner ring portion to form flange ends, which cover an upper and a lower end faces of said stator inner ring portion, an outer periphery of each of said flange ends having a plurality of end cove plate positioning holes, which are concentrically locked with two end faces of the stator inner ring portion to form said hollow space of said inner ring portion, a driving circuit of said driving circuit board in said hollow space is soldered to said stator coils to form an exciting coil winding network, said control circuit board being controlled by an external control system to let said driving circuit board maneuver said stator coils to excite armature reaction with said outer rotor magnet.

## Patentansprüche

1. Anordnung einer Radwicklung einer inneren Statorbaugruppe (21) mit einem eingebauten Antriebsregelungsschaltkreis, umfassend
eine innere Statorbaugruppe (21), deren innere Ringbaugruppe (211) einen maximalen Hohlraum (214) bildet, eine äußere Kante der inneren Ringbaugruppe (21), welche äquidistant und radial nach außen gerichtet ist, um eine Vielzahl von Statorzähnen (212) zu bilden, wobei Drahtnute (215) zwischen gegenüberliegenden Stator-Fuß-Enden (218) gebildet werden zur Aufnahme von Statorwicklungen (413);
eine Stator-Magnet-Schaltkreis-Platine (415) umfassend eine Vielzahl von Löt-Bohrungen (417), so dass Kabelköpfe/Kabelenden (419) der Statorwicklungen (413) hindurchragen und befestigt werden können;
zwei End-Abdeckungs-Platten (31) welche eine untere und obere Endfläche der inneren Statorringbaugruppe (211) abdecken, wobei zentrale Enden der zwei Endabdeckungsplatten (31) mit einem gemeinsamen Zentrum einer äußeren Rotorbaugruppe (61) und der inneren Statorbaugruppe (21) eines Motors zur Bildung einer konzentrischen Durchgangsbohrung (317) korrespondieren;
einen Antriebs-Regelungs-Schaltkreis, der gelötet und fixiert ist an einer Antriebs-Regelungs-Platine (511) und einer Regelungs-Schaltkreis-Platine (514), welche festgelegt ist an einer Seite der Endabdeckungsplatten (31) und angeordnet ist in dem Hohlraum (214) der inneren Statorringbaugruppe (211);
eine Radwicklungs-Unterstützungs-Welle (311), die eng in der konzentrischen Durchgangsbohrung (317) an den zentralen Enden der Endabdeckungsplatten (31) anliegt und aus einer Gehäuseendabdeckungsplatte (613) der Radwicklung herausragt, wobei mindestens mehr als eine Durchgangsbohrung (313) an der Unterstützungswelle (311) angeordnet ist, um durchdrungen werden zu können von Stromversorgungsleitungen des Antriebs-Steuerungs-Schaltkreises, wobei Steuerimpulse des Regelungsschaltkreises auch übertragen werden von einem externen Regelungssystem über die Durchgangsbohrungen (313); und
eine äußere Rotorbaugruppe (61) umfassend ein Lager (614), wobei eine innere Bohrung des Lagers (614) nach Art einer Hülse auf der Rat-Wicklungs-Unterstützungswelle (311) und eine äußere Bohrung nach Art einer Hülse in dem Gehäuse Endabdeckungsplatten (613) der äußeren Rotorbaugruppe (61) angeordnet ist, wobei die Gehäuseendabdeckungsplattte (613) einen äußeren Rotormagneten (615) und einen magnetischen Metall-Joch-Ring (611) klammert und festlegt zur Erregung einer Läuferreaktion mit der inneren Statorbaugruppe (21).

2. Anordnung einer Radwicklung einer inneren Statorbaugruppe mit einem eingebauten Antriebsregelungsschaltkreis nach Anspruch 1, wobei die Statorwicklungen in den Drahtnuten geformt werden durch ein separates Wickeln oder Pressen und Biegen, wobei jede Statorwicklung in den Drahtnutsitz geschoben ist, installiert an einem Stator-Fuß-Ende und dann eingedrückt in eine umhüllende Nut der Stator-Ring-Baugruppe.

3. Anordnung einer Radwicklung einer inneren Statorbaugruppe mit einem eingebauten Antriebsregelungsschaltkreis nach Anspruch 1, **dadurch kennzeichnet, dass** die Statorwicklungen in den Drahtnuten direkt in die Drahtnuten gewunden sind, an Stator-Fuß-Enden angeordnet sind und danach in umgebenden Nuten der Stator-Ring-Baugruppen geschleift sind.

4. Anordnung nach Anspruch 1, **dadurch gekennzeichnet, dass** die Statorwicklungen in den Drahtnuten der inneren Statorbaugruppe geformt werden durch konzentrische Windungen über den Nuten und dann isoliert angeordnet sind in den Drahtnuten.

5. Anordnung nach Anspruch 1, **dadurch gekennzeichnet, dass** die innere Stator-Ring-Baugruppe und die Statorzähne der inneren Statorbaugruppe unabhängig voneinander geformt sind durch Ziehen und Schlichten und dass die inneren Statorzähne mit Drahtnut-Sitzen und den inneren Statorwicklungen montiert sind und danach mit der inneren Stator-Ring-Baugruppe überworfen sind, um eine gesamte innere Statorbaugruppe zu bilden.

6. Anordnung nach Anspruch 1, **dadurch gekennzeichnet, dass** die innere Statorringbaugruppe und die Statorzähne der inneren Statorbaugruppe sind durch Ziehen und Schichten einstückig geformt und das die Statorwicklungen isoliert angeordnet sind in den Drahtnuten.

7. Anordnung nach Anspruch 1, **dadurch gekennzeichnet, dass** die Regelungs-Schaltkreis-Platine des Antriebs-Regelungs-Schaltkreises in dem Hohlraum der inneren Statorringbaugruppe angeordnet ist.

8. Anordnung nach Anspruch 1, **dadurch gekennzeichnet, dass** sowohl die Antriebs-Schaltkreis-Platine, als auch die Regelungs-Schaltkreis-Platine der Antriebs-Regelungs-Schaltkreise in dem Hohlraum der inneren Stator-Ring-Baugruppe angeordnet sind.

9. Anordnung nach Anspruch 1, **dadurch gekennzeichnet, dass** die äußeren Enden der Endabdeckungsplatten der inneren Statorbaugruppe korrespondieren mit dem Hohlraum der inneren Ring-Baugruppe um Flanschenden zu bilden, welche obere und untere Endflächen der inneren Stator-Ring-Baugruppe abdecken, wobei ein äußerer Rand der Flanschenden eine Vielzahl von Positionierbohrungen für die Endabdeckungsplatte aufweist, welche konzentrisch verbunden ist mit zwei Endflächen der inneren Stator-Ring-Baugruppe, um einen Hohlraum der inneren Ringbaugruppe zu bilden, wobei ein Antriebsschaltkreis der Antriebsschaltkreisplatine in dem Hohlraum festgelötet ist an den Statorwicklungen, um einer Erregerwicklung zu bilden, wobei die Regelungsschaltkreisplatine gesteuert wird von einem externen Steuerungssystem, um die Antriebsregelunsplatine dazu zu bringen, die Statorwicklungen zu bewegen und eine Läuferreaktion mit dem äußeren Polradmagneten zu erregen.

## Revendications

1. Structure de tambour de roue d'une partie (21) d'un stator interne avec un circuit de contrôle d'entraînement incorporé, comprenant :
une partie (21) de stator interne dont la partie (211) annulaire intérieure forme un espace (214) creux maximal ; une extrémité de bord extérieure de ladite partie (21) annulaire intérieure s'étendant vers l'extérieur de façon équidistante et de façon radiale pour former une multitude de dents de stator (212) ; des rainures (215) de câblages étant formées entre des extrémités (218) adjacentes de la base de stator pour recevoir des bobines de stator (413) ; un tableau de circuit de la bobine du stator (415) fournissant une multitude de trous de soudure (417) de manière à ce que des têtes / queues des files (419) desdites bobines de stator (413) puissent traverser et être fixés ; deux plaques (31) de recouvrement d'extrémités couvrant des côtés terminaux supérieurs et inférieurs de ladite partie (211) annulaire intérieure du stator, des extrémités centrales desdites deux plaques (31) de recouvrement d'extrémités correspondant à un centre commun d'une partie (61) de rotor extérieure et ladite partie (21) de stator interne d'un moteur pour former un trou de passage concentrique (317);
un circuit de contrôle d'entraînement brasé et fixé sur un tableau de circuit d'entraînement (511) et un tableau de circuit de contrôle (514) qui sont fermés sur un côté desdites plaques (31) de recouvrement d'extrémités et disposés dans ledit espace (214) creux de ladite partie (211) annulaire intérieure du stator; un arbre (311) de support de tambour de roue relié de façon fixe dans ledit trou (317) de passage concentrique sur les extrémités centrales du tambour de roue ; plus d'un trou de passage (313) étant disposé sur ledit arbre (311) de support pour être traversé par des câbles d'alimentation d'énergie dudit circuit de contrôle d'entraînement ; les instructions dudit circuit de contrôle étant également transmises d'un système de contrôle d'entraînement par lesdits trous (313) de passage ; et une partie (61) de rotor extérieure comprenant un palier (614) ; un alésage interne dudit palier (614) étant emmanché sur ledit arbre (311) de support de tambour de roue et un alésage extérieur dudit palier étant emmanché dans ladite plaque (613) de recouvrement d'extrémité de boîtier de ladite partie (61) de rotor extérieure ; ladite plaque (613) de recouvrement d'extrémité de boîtier étant éclipsée sur et verrouillant et un aimant (615) de rotor extérieur et un anneau de raccord en fer magnétique (611) pour provoquer une réaction de l'armature avec ladite partie (21) de stator interne.

2. La structure de tambour de roue d'une partie de stator interne avec un circuit de contrôle d'entraînement incorporé comme revendiqué dans la revendication 1, où lesdites bobines de stator dans lesdites rainures de câblage sont formées en enroulant de façon séparée ou en pressant et pliant chacune desdites bobines de stator emmanché dans un siège de rainure de câblage, installé sur une extrémité de base de stator, puis emmanché dans une rainure incorporant de ladite partie annulaire de stator.

3. La structure de tambour de roue d'une partie de stator interne avec un circuit de contrôle d'entraînement incorporé comme revendiqué dans la revendication 1, où lesdites bobines de stator dans lesdites rainures de câblage sont directement enroulées dans lesdites rainures de câblages, installées dans des extrémités de la base du stator, puis insérées dans des rainures incorporant de ladite partie annulaire de stator.

4. La structure de tambour de roue d'une partie de stator interne avec un circuit de contrôle d'entraînement incorporé comme revendiqué dans la revendication 1, où lesdites bobines de stator dans ladite partie de stator des rainures de fil sont formées en enroulant de façon concentrique à travers des rainures puis sont disposées de façon isolée dans lesdites rainures de câblage.

5. La structure de tambour de roue d'une partie de stator interne avec un circuit de contrôle d'entraînement comme revendiqué dans la revendication 1, où ladite partie annulaire interne du stator et lesdites dents de stator de ladite partie de stator interne sont formées de façon indépendante en tirant et empilant , et lesdites dents de stator sont assemblées avec des sièges de rainure de câblage et lesdites bobines de stator , puis emmanchées avec ladite partie annulaire interne de stator pour former toute une partie de stator interne.

6. La structure de tambour de roue d'une partie de stator interne avec un circuit de contrôle d'entraînement comme revendiqué dans la revendication 1, où ladite partie annulaire interne du stator et lesdites dents de stator de ladite partie de stator interne sont formées entièrement en tirant et empilant, et lesdites bobines de stator sont alors installées de façon isolée dans lesdites rainures de câblage.

7. La structure de tambour de roue d'une partie interne de stator avec un circuit de contrôle d'entraînement incorporé comme revendiqué dans la revendication 1, où seul ledit tableau de circuit d'entraînement dudit circuit de contrôle d'entraînement est installé dans ledit espace creux de ladite partie annulaire interne du stator.

8. La structure de tambour de roue d'une partie de stator interne avec un circuit de contrôle d'entraînement incorporé comme revendiqué dans la revendication 1, où ledit tableau de circuit d'entraînement et ledit tableau de circuit de contrôle dudit circuit de contrôle d'entraînement sont installés dans ledit espace creux de ladite partie annulaire interne du stator.

9. La structure de tambour de roue d'une partie de stator interne avec un circuit de contrôle d'entraînement incorporé comme revendiqué dans la revendication 1, où les extrémités de bord extérieures desdites plaques de recouvrement d'extrémité de la partie de stator interne correspondent audit espace creux de ladite partie annulaire interne pour former des extrémités de flasque ; une périphérie extérieure de chacune desdites extrémités de flasque ayant une multitude de trous de positionnement de la plaque de recouvrement d'extrémité qui sont fermés de façon concentrique avec deux côtés terminaux de la partie annulaire interne du stator pour former ledit espace creux de ladite partie annulaire interne de stator ; un circuit d'entraînement dudit tableau de circuit d'entraînement dans ledit espace creux étant soudé audites bobines de stator pour former un réseau d'enroulement de bobine d'excitation ; ledit tableau de circuit de contrôle étant contrôlé par un système de contrôle externe pour conduire ledit tableau de circuit d'entraînement à manoeuvrer lesdites bobines de stator pour provoquer une réaction de l'armature avec ledit aimant de rotor externe.
